# EUROPÄISCHE PATENTSCHRIFT

(11) **EP 0 675 016 B1**
(45) Veröffentlichungstag und Bekanntmachung des Hinweises auf die Patenterteilung: **10.09.1997**
(21) Anmeldenummer: 95103924.7
(22) Anmeldetag: 17.03.1995
(51) Int. Cl.: B60J 7/057

(54) **Bedienelement für ein motorisch über verschiedene Zwischenstadien öffnungsfähiges Fahrzeugdach**
Control element for a motorized and in several positions openable vehicle roof
Elément de commande permettant d'ouvrir un toit de véhicule de façon motorisée et en plusieurs positions intermédiaires

(30) Priorität: 31.03.1994 DE 4411388
(43) Veröffentlichungstag der Anmeldung: 04.10.1995
(73) Patentinhaber: WEBASTO KAROSSERIESYSTEME GmbH, D-82131 Stockdorf (DE)
(72) Erfinder: Weissbrich, Alfons, Dr., D-82131 Gauting (DE); Danzl, Martin, D-80797 München (DE); Mayer, Johann, D-85238 Petershausen (DE)
(74) Vertreter: Wiese, Gerhard

(56) Entgegenhaltungen:
- DE-A- 3 728 008
- DE-A- 4 203 229
- ATZ-AUTOMOBILTECHNISCHE ZEITSCHRIFT, Bd.90, Nr.3, März 1988, STUTTGART,DE. Seiten 117 - 120 GAUS-VOGEL 'POSITION AUTOMATIK-KOMFORT UND SICHERHEIT FÜR DAS SCHIEBEDACH.'

## Beschreibung

Die Erfindung betrifft ein Bedienelement für ein motorisch über verschiedene Zwischenstadien öffnungsfähiges Fahrzeugdach mit einem drehbaren Schalter und mit um den Schalter herum angeordneten, das jeweilige Öffnungsstadium signalisierenden Schaltsymbolen.

Ein derartiges Bedienelement ist aus der DE-A-33 24 107 (siehe dort Fig. 6) bekannt. Jenes Bedienelement dient zur Voreinstellung einer gewünschten Deckelposition des Deckels eines herkömmlichen Schiebe-Hebedaches. Eine Öffnungsbewegung des Deckels zum Ausstellen seiner Hinterkante über eine feste Dachhaut wird durch Drehen des Bedienelementes, ausgehend von der Null-Position in eine Richtung voreingestellt, während ein Drehen aus der Null-Position in die andere Richtung eine Öffnung des Deckels durch Verschieben desselben unter die feste Dachhaut vorgibt. Die verschiedenen Deckelpositionen werden mittels eines einzigen Antriebes erzeugt, den das bekannte Bedienelement ansteuert.

Der vorliegenden Erfindung liegt die Aufgabe zugrunde, ein Bedienelement bereitzustellen, das zur Betätigung komplexerer Fahrzeugdächer mit mehreren Antrieben geeignet ist.

Diese Aufgabe wird durch die im Anspruch 1 angegebenen Merkmale gelöst. Dabei werden gemäß der Erfindung mehrere, teilweise unabhängig voneinander zu betätigende Dachkomponenten, die mittels separater Antriebe betätigbar sind, durch einen Schalter angesteuert, der bei einer Drehbewegung verschiedene Umfangsbereiche durchfährt, in denen einzelne oder mehrere Antriebe zum Anfahren vorbestimmter Öffnungsstadien nacheinander oder gleichzeitig betätigt werden. Mittels des erfindungsgemäßen Bedienelementes ist eine komfortable einhändige Bedienung eines aus mehreren öffnungsfähigen Dachkomponenten bestehenden Fahrzeugdaches ermöglicht. Vorteilhafte Ausgestaltungen der Erfindung sind den Unteransprüchen zu entnehmen.

In einer vorteilhaften Ausgestaltung wird beim Drehen des Schalters, ausgehend von einer der Schließposition des Daches entsprechenden Null-Stellung in einer Drehrichtung in einem ersten Umfangsbereich zunächst der Motor einer am vorderen Rand des Daches ausstellbaren Windabweislamelle angesteuert. Eine solche Windabweislamelle gibt dabei vorteilhafterweise mit mehreren Zwischenpositionen einen Lüftungsspalt im vorderen Bereich des Daches frei.

Vorteilhaft ist es ferner, wenn der Schalter in einem Umfangsbereich den Motor wenigstens eines in Fahrzeuglängsrichtung verstellbaren Schiebedeckels ansteuert. Dieser Umfangsbereich für die Ansteuerung wenigstens eines Schiebedeckels schließt sich vorteilhaft als zweiter Umfangsbereich an den ersten Umfangsbereich zur Ansteuerung der Windabweislamelle an. Dadurch werden nacheinander zunächst die Windabweislamelle und anschließend der Schiebedeckel bis zur vollständigen Öffnung betätigt. Die geöffnete Windabweislamelle verbleibt dabei während der Öffnung des Schiebedeckels im ausgestellten Zustand und dient zur Ableitung des Fahrtwindes über die durch den Schiebedeckel freigegebene Dachöffnung hinweg.

Als ergonomisch günstig hat es sich erwiesen, wenn der erste Umfangsbereich und der zweite Umfangsbereich zusammen einen Drehwinkel des Schalters von etwa 180° beanspruchen.

Vorteilhafterweise weisen die einzelnen Umfangsbereiche Zwischenrastungen zur Einstellung von Zwischenposition auf. Dadurch kann der Bediener, ohne seinen Blick vom Verkehrsgeschehen ablenken zu müssen, durch eine leichte spürbare Veränderung des Drehwiderstandes sowie gegebenenfalls ergänzend durch ein akustisches Signal, z.B. in Form eines Klackens beim Durchfahren der Zwischenrasten die jeweils eingestellte Position akustisch erkennen.

Gemäß einer weiteren vorteilhaften Ausgestaltung ist vorgesehen, daß durch eine Betätigung des Schalters als weitere Dachkomponenten seitliche und hintere, zeitweise feststehende Dachteile, gemeinsam mit dem oder den geöffneten Schiebedeckel(n) zur Freigabe einer cabrioartigen Dachöffnung in einen Stauraum im hinteren Teil des Fahrzeuges verfahrbar sind. Bei einem solchen Bedienelement weist der Schalter, ausgehend von der Null-Stellung, in der bezüglich des ersten Umfangsbereiches umgekehrten Drehrichtung vorzugsweise einen Schaltbereich auf, der zur Ansteuerung der Antriebe aller Dachkomponenten für eine vollständige Schließung des Daches dient. Es ist ferner vorteilhaft, wenn dieser Schalter anschließend an den zweiten Umfangsbereich einen Schaltbereich aufweist, der zur Ansteuerung der Antriebe der weiteren Dachkomponenten für eine vollständige Öffnung des Daches dient. Durch eine solche Auslegung des Bedienelementes wird dieses auch zur Ansteuerung eines solch komplexen Fahrzeugdaches geeignet, das sich von einem limousinenähnlichen Fahrzeug mit Festelementdachteilen bis hin zu einem cabrioartigen Fahrzeug verwandeln läßt.

Zur Erhöhung der Bediensicherheit eines solchen vollständig öffnungsfähigen Daches ist es vorteilhaft, wenn die Schaltbereiche für das vollständige Schließen bzw. Öffnen des Daches als Taster ausgelegt sind. Da bei einer solchen Tasterfunktion der Bedienende das Bedienelement ständig in der gewünschten Bewegungsrichtung gegen einen Federdruck betätigen muß, ist gewährleistet, daß nicht unbeabsichtigt Menschen oder Gegenstände bei einer selbsttätig ablaufenden Bewegung der Dachkomponenten eingeklemmt werden.

Zur Erhöhung der Bediensicherheit ist es ferner vorteilhaft, wenn eine Betätigung des Schalters in den Schaltbereichen für das vollständige Schließen oder Öffnen des Daches bei gleichzeitigem Überschreiten einer bestimmten Geschwindigkeit des Fahrzeuges ein Warnsignal erzeugt. Zusätzlich oder alternativ hierzu ist es vorteilhaft, wenn eine Betätigung des Schalters in diesen Bereichen bei gleichzeitigem Überschreiten einer bestimmten Geschwindigkeit des Fahrzeuges blockiert wird. Dadurch wird sichergestellt, daß Schwerkbewegungen von Dachteilen in den Geschwindigkeitsbereichen unterbunden werden, in denen sie aufgrund des fahrtwindbedingten Staudruckes oder aufgrund der durch die spektakulären Bewegungen drohenden Ablenkung anderer Verkehrsteilnehmer nicht mehr gefahrlos möglich wären.

Schließlich ist es vorteilhaft, wenn als weitere öffnungsfähige Dachkomponente eine absenkbare Heckscheibe vorgesehen ist, zu deren separater wechselweiser Öffnungs-bzw. Schließbewegung ein in einem Griff des Schalters angeordneter Tipp-Taster vorgesehen ist.

Nachfolgend ist ein Ausführungsbeispiel der Erfindung anhand der Zeichnung beschrieben. Es zeigt:
- Fig. 1: einen schematischen Längsschnitt durch ein Fahrzeug mit einem öffnungsfähigen Fahrzeugdach und
- Fig. 2: ein dafür geeignetes Bedienelement.

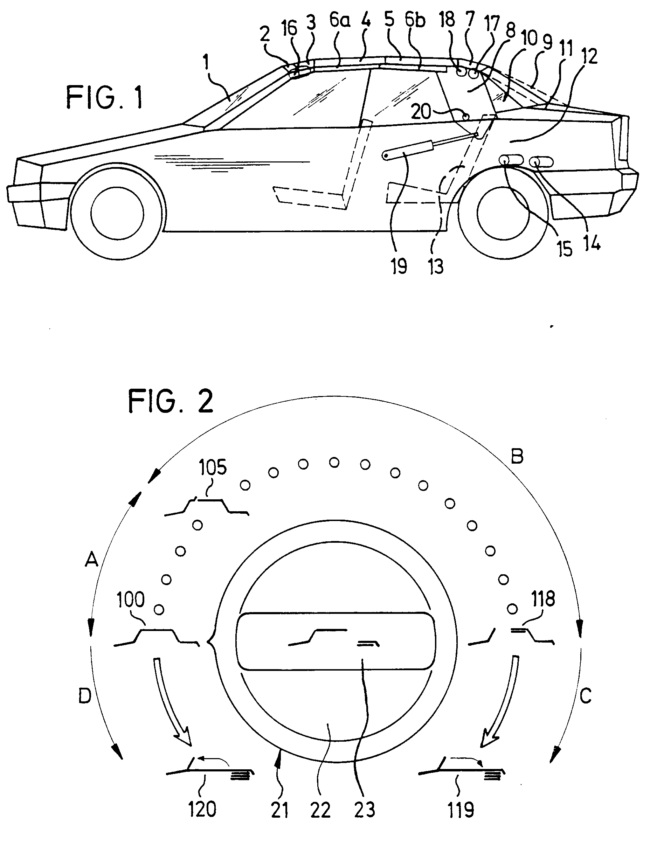

Bei dem in Fig. 1 dargestellten Fahrzeug schließt sich an eine Frontscheibe 1 ein sich oberhalb dieser erstreckender vorderer Querträger 2 und eine schwenkbar an diesen befestigte Windabweislamelle 3 an. An die Windabweislamelle 3 schließen sich nach hinten ein vorderer Schiebedeckel 4, ein hinterer Schiebedeckel 5 und ein hinteres Dachteil 7 an. Zu beiden Seiten des Schiebedeckels 4 und 5 sind seitliche Dachteile 6a, 6b vorgesehen, die nicht dargestellte Führungsschienen zur Führung der Schiebedeckel 4 bzw. 5 aufweisen. Die seitlichen Dachteile 6a und 6b sind am hinteren Dachteil 7 schwenkbar angelenkt und sind mit dem vorderen Querträger 2 lösbar verbunden. Das hintere Dachteil 7 ruht beidseitig auf den C-Säulen 8, die die Verbindung zum Fahrzeugunterteil herstellen. Im Ausführungsbeispiel bilden das hintere Dachteil 7 und die beiden C-Säulen 8 einen geschlossenen Überrollbügel.

An das hintere Dachteil 7 schließt sich nach hinten eine Heckscheibe 9 an, die mit ihrer Oberkante dichtend am hinteren Dachteil 7 anliegt. Zwischen den C-Säulen 8, dem hinteren Dachteil 7 und der Heckscheibe 9 sind zu beiden Seiten Dreieckfenster 10 angeordnet, die an den C-Säulen 8 nach innen klappbar gelagert sind.

Hinter einer hinteren Sitzbank 13 des Fahrzeuges ist ein Stauraum 12 zur Aufnahme des kompletten Daches vorgesehen, der von einer Abdeckung 11 abdeckbar ist. Zur Bewegung der Abdeckung 11 zum Freigeben oder Verschließen des Stauraumes 12 ist ein Antrieb 14 im Bereich des Stauraumes 12 vorgesehen. Im Stauraum 12 ist ein weiterer Antrieb 15 angeordnet, der zum Absenken und Anheben der Heckscheibe 9 dient. Im vorderen Querträger 2 ist ein Antrieb 16 angeordnet, der die Ausstellung der Windabweislamelle bewirkt.

Im hinteren Dachteil 7 ist ein Antrieb 17 für das Verfahren der Deckel 4 bzw. 5 vorgesehen und ferner ein Antrieb 18 für die Schwenkbewegung der seitlichen Dachteile 6a, 6b.

Ein vorzugsweise hydraulischer Antrieb 19, der im hinteren Bereich der Seitenwände des Fahrzeuges angeordnet ist, sorgt für ein Verschwenken der C-Säulen 8 mit dem hinteren Dachteil 7 um einen Drehpunkt 20 in den Stauraum 12, wenn die Schiebedeckel 4 und 5 unter dem hinteren Dachteil 7 aufgenommen und die seitlichen Dachteile 6a und 6b an das hintere Dachteil 7 angeschwenkt sind. Soweit vorstehend beschrieben, ist ein solches öffnungsfähiges Fahrzeugdach aus der DE-A-42 03 229 bekannt.

Das in Fig. 2 dargestellte Bedienelement zur Betätigung der im Zusammenhang mit Fig. 1 beschriebenen Antriebe weist einen Schalter 21 auf, der einen Griff 22 und einen darin integrierten Tipptaster 23 umfaßt. Der drehbare Schalter 21 ist an seinem Umfang mit Schaltsymbolen umgeben. Die Schaltsymbole geben teilweise piktogrammartig bestimmte Öffnungspositionen des Fahrzeugdaches wieder; andere zwischen diesen Grenzpositionen befindliche Positionen sind durch Punkte als Zwischenrasten markiert. Der Schalter 21 weist in der Darstellung in Fig. 2 auf das die Null-Stellung signalisierende Schaltsymbol 100, welches der vollständig geschlossenen Position des Fahrzeugdaches entspricht. Ausgehend von dieser Null-Stellung wird der Schalter 21 durch Drehen nach rechts über vier nicht näher bezeichnete Zwischenpositionen auf die Schaltposition 105 betätigt, die einer vollständigen Ausstellung der Windabweislamelle 3 entspricht. Der Umfangsbereich zwischen der Schaltposition 100 und Schaltposition 105 ist als erster Umfangsbereich mit A bezeichnet. An diesen schließt sich in derselben Drehrichtung, ausgehend vom Schaltsymbol 105, über zwölf nicht näher bezeichnete Zwischenrasten ein Umfangsbereich B an, der an seinem Ende von einem Schaltsymbol 118 begrenzt wird, das einem vollständig geöffneten Zustand beider Schiebedeckel 4 bzw. 5 entspricht. Die Zwischenrasten erlauben dabei beliebige Zwischenpositionen, bei denen beispielsweise nach den ersten sechs durch Punkte symbolisierten Zwischenrasten der erste Schiebedeckel 4 vollständig geöffnet ist, und im weiteren Verlauf stufenweise der zweite Schiebedeckel 5 geöffnet wird. In der selben Drehrichtung nach rechts schließt sich an den zweiten Umfangsbereich B ein Schaltbereich C an, dessen unteres Ende durch ein Schaltsymbol 119 markiert wird, das eine vollständige Öffnung des gesamten Fahrzeugdaches und dessen Verstauen in einen hinteren Stauraum 12 symbolisiert.

Ausgehend von der in Fig. 2 dargestellten Null-Stellung schließt sich an das Schaltsymbol 100 in Drehrichtung nach links ein Schaltbereich D an, der an seinem unteren Ende durch ein Schaltsymbol 120 begrenzt wird, welches ein vollständiges Schließen des Fahrzeugdaches aus dem vollständig geöffneten oder einen beliebigen Zwischenzustand signalisiert.

Die Betätigung in den beiden Schaltbereichen C bzw. D für ein vollständiges Öffnen bzw. Schließen des Fahrzeugdaches ist vorzugsweise als eine Tasterfunktion ausgeführt, d.h., der Bedienende muß den Schalter 21 gegen den Druck einer Feder auf das Schaltsymbol 119 bzw. 120 hin betätigt halten, bis der Öffnungs- bzw. Schließvorgang vollständig abgeschlossen ist. Ein vorzeitiges Loslassen führt zu einer Unterbrechung des Öffnungs-bzw. Schließvorganges. Durch diese Taster-Bedienung ist gewährleistet, daß ein vollständiges Öffnen oder Schließen des Fahrzeugdaches nur unter ständiger Kontrolle des Bedienenden erfolgen kann, wodurch ein Einklemmen von Körperteilen oder Gegenständen durch das bewegte Fahrzeugdach weitestgehend ausgeschlossen wird. Als ergonomisch günstig hat sich erwiesen, wenn der Umfangsbereich A und der Umfangsbereich B gemeinsam einen Winkelbereich des Schalters 21 von etwa 180° überdecken. Dieser Winkelbereich liegt vorzugsweise in der oberen Hälfte des Schalters 21 in dessen Gebrauchslage. Dadurch wird dem Benutzer angedeutet, daß sich alle Betätigungen des Schalters 21 in diesem Bereich ausschließlich auf Elemente beziehen, die sich oberhalb seines Kopfes am Dach bewegen. Dagegen hat eine Betätigung des Schalters 21 in der unteren Kreisringhälfte (Schaltbereiche C oder D) für ihn die Signalwirkung, daß dadurch Dachteile in den Bereich unterhalb der Gürtellinie des Autos verfahren werden oder aus diesem wieder emporgefahren werden. Eine Betätigung des Schalters 21 in den Schaltbereichen C bzw. D für ein vollständiges Öffnen bzw. Schließen des Fahrzeugdaches ist gemäß einer vorteilhaften Ausgestaltung durch eine geschwindigkeitsabhängige Kontrolle abgesichert. Diese Absicherung kann entweder bei einer Betätigung des Schalters 21 oberhalb einer bestimmten Fahrzeuggeschwindigkeit ein Warnsignal akustischer oder optischer Art auslösen und/oder in einer anderen Variante zusätzlich zu einer Sperrung des Schalters 21 führen. Dies läßt sich in einfacher Weise elektrisch dadurch erreichen, daß in die Tasterfunktionen der Schaltbereiche C bzw. D ein in Reihe liegender Schalter eingebunden wird, der bei Überschreiten einer bestimmten tachoabhängigen Fahrzeuggeschwindigkeit geöffnet wird, wobei vorzugsweise zusätzlich ein Warnsignal abgegeben wird.

In den Schalter 21, bzw. in dessen Griff 22 ist ein Kipptaster 23 integriert, der als Wechselschaltfunktion ein vollständiges Absenken bzw. bei der nächsten Betätigung ein vollständiges Anheben der Heckscheibe 9 bewirkt. Diese Betätigung ist teilweise unabhängig von den übrigen Dachkomponenten möglich. So kann beispielsweise die Heckscheibe bei vollständig geschlossenem Dach, bei ausgestellter Windabweiserlamelle 3 oder bei geöffneten Schiebedeckeln 4 bzw. 5 abgesenkt oder auch angehoben werden. Erst bei einer Betätigung zum vollständigen Öffnen des Daches (Schaltbereich C) wird die Heckscheibe 9 unabhängig von der Betätigung des Tipptasters 23 im normalen Öffnungsablauf des gesamten Fahrzeugdaches mit abgesenkt, falls sie sich nicht schon in diesem Zustand befindet. Umgekehrt wird auch bei einer Betätigung im Schaltbereich D für ein vollständiges Schließen des Fahrzeugdaches die Heckscheibe 9 unabhängig von der vorher erfolgten Betätigung des Tipptasters 23 mit angehoben, um das Fahrzeugdach vollständig zu schließen.

Bei einer normalen Betätigung des in Fig. 1 dargestellten Fahrzeugdaches wird dieses je nach Witterungsverhältnissen und Bedürfnissen des Fahrers stufenweise so geöffnet, daß zunächst durch ein Drehen des Schalters 21 vom Schaltsymbol 100 bei vollständig geschlossenem Dach über die Zwischenrasten bis zum Erreichen der Schaltposition 105 die Windabweiserlamelle 3 vollständig ausgestellt wird. Danach wird durch ein weiteres Drehen nach rechts im Umfangsbereich B eine gewünschte Zwischenposition des bzw. der Schiebedeckel 4 bzw. 5 hergestellt. Hierbei kann jeweils unabhängig von der Lage der Windabweiserlamelle 3 oder der Schiebedeckel 4 bzw. 5 die Heckscheibe 9 abgesenkt oder angehoben sein. Wird eine noch weitere Öffnung des Fahrzeugdaches bis hin zu einem cabrioartigen Fahrzeug gewünscht, so wird nach vollständigem Zurückfahren der Deckel 4 bzw. 5 (entsprechend Schaltposition 118) der Schalter 21 im Schaltbereich C in Richtung auf das Schaltsymbol 119 hin betätigt und in dieser Position gehalten, bis gegebenenfalls die Heckscheibe 9 abgesenkt hat, die seitlichen Dachteile 6a und 6b an das hintere Dachteil 7 angeschwenkt wurden, die Abdeckung 11 geöffnet wurde und das gesamte Paket aus hinterem Dachteil 7 mit daran angeklappten seitlichen Dachteilen 6a, 6b und darin aufgenommenen Schiebedeckeln 4 bzw. 5 durch Schwenken mittels des Antriebes 19 um den Schwenkpunkt 20 in den Stauraum 12 versenkt wird.

Zum Schließen aus der vollständig geöffneten Position wird der Schalter 21 vom Schaltsymbol 118 um 180° nach links auf das Schaltsymbol 100 gedreht und von hier aus im Schaltbereich D federbelastet gegen das Schaltsymbol 120 hin betätigt. Hierbei wird zunächst der Antrieb 14 für die Abdeckung 11 im Sinne einer Öffnung derselben betätigt, dann der Antrieb 19 für ein Hochschwenken des hinteren Dachteils 7 mit den C-Säulen 8, dann der Antrieb 18 für ein Ausschwenken der seitlichen Dachteile 6a, 6b in ihre gestreckte Position mit anschließendem Verriegeln mit dem vorderen Querträger 2, dann der Antrieb 17 für ein Schließen der Schiebedeckel 5 bzw. 4 und schließlich der Antrieb 16 für ein Schließen der Windabweislamelle 3. Parallel zum Ausschwenken der seitlichen Dachteile 6a, 6b mittels des Antriebs 18 wird auch die Heckscheibe 9 mittels des Antriebs 15 in ihre angehobene Schließposition verfahren. Danach wird der Antrieb 14 für die Abdeckung 11 im Sinne einer Schließung derselben betätigt. Nachdem der Schließvorgang abgeschlossen ist, federt der Schalter 21 nach Wegfall der Bedienkraft vom Schaltsymbol 120 zur Schaltposition 100 in seine Grundstellung zurück.

Mittels des vorstehend beschriebenen Bedienelementes ist eine komfortable, einhändige Bedienung eines komplexen Fahrzeugdaches mit mehreren einzeln oder gemeinsam betätigbaren Antrieben möglich geworden.

### Bezugszeichenliste

- 1: Frontscheibe
- 2: vorderer Querträger
- 3: Windabweislamelle
- 4: vorderer Deckel
- 5: hinterer Deckel
- 6a: seitliche Dachteile (mit Führungsschienen)
- 6b: seitliche Dachteile (mit Führungsschienen)
- 7: hinteres Dachteil
- 8: C-Säule
- 9: Heckscheibe
- 10: Dreieckfenster
- 11: Abdeckung
- 12: Stauraum
- 13: (hintere) Sitzbank
- 14: Antrieb für Abdeckung
- 15: Antrieb für Heckscheibe
- 16: Antrieb für Windabweislamelle
- 17: Antrieb für vorderen und hinteren Deckel
- 18: Antrieb für seitliche Dachteile
- 19: Hydraulikzylinder
- 20: Drehpunkt für C-Säule
- 21: Schalter
- 22: Griff
- 23: Tipp-Taster
- 100: Null-Stellung
- 105: Windabweislamelle voll ausgestellt
- 118: Schiebedeckel vollständig geöffnet
- 119: Dach vollständig öffnen
- 120: Dach vollständig schließen
- A: erster Umfangsbereich (zur Ansteuerung von 16)
- B: zweiter Umfangsbereich (zur Ansteuerung von 17)
- C: Schaltbereich (zur Ansteuerung von 14,15,18,19)
- D: Schaltbereich (zur Ansteuerung von 14,15,16,17,18,19)

## Patentansprüche

1. Bedienelement für ein motorisch über verschiedene Zwischenstadien öffnungsfähiges Fahrzeugdach mit einem drehbaren Schalter (21) und mit um den Schalter herum angeordneten, das jeweilige Öffnungsstadium signatisierenden Schaltsymbolen (100-120), **dadurch gekennzeichnet**, daß das öffnungsfähige Fahrzeugdach mehrere teilweise unabhängig voneinander zu betätigende Dachkomponenten (3,4,5,6a,7,8,9,10,11) umfaßt, die mittels separater Antriebe (14,15,16,17,18,19) betätigbar sind und daß der Schalter (21) bei einer Drehbewegung in verschiedenen Umfangsbereichen (A-D) einzelne oder mehrere Antriebe (14,15,15,17,18,19) zum Anfahren vorbestimmter Öffnungsstadien nacheinander oder gleichzeitig ansteuert.

2. Bedienelement nach Anspruch 1, **dadurch gekennzeichnet**, daß der Schalter (21) ausgehend von einer der Schließpositionen des Daches entsprechenden Nullstellung (100) in einer Drehrichtung in einem ersten Umfangsbereich (A) zunächst den Antrieb (16) einer am vorderen Rand des Daches angeordneten ausstellbaren Windabweislamelle (3) ansteuert.

3. Bedienelement nach Anspruch 1, **dadurch gekennzeichnet**, daß der Schalter (21) in einem Umfangsbereich (B) den Antrieb (17) wenigstens eines in Fahrzeuglängsrichtung verstellbaren Schiebedeckels (4,5) ansteuert.

4. Bedienelement nach Anspruch 2 und 3, **dadurch gekennzeichnet**, daß der Umfangsbereich für die Ansteuerung des wenigstens einen Schiebedeckels (4,5) sich als zweiter Umfangsbereich (B) an den ersten Umfangsbereich (A) anschließt.

5. Bedienelement nach Anspruch 4, **dadurch gekennzeichnet**, daß der erste Umfangsbereich (A) und der zweite Umfangsbereich (B) zusammen einem Drehwinkel des Schalters (21) von etwa 180° entsprechen.

6. Bedienelement nach einem der Ansprüche 1 bis 5, **dadurch gekennzeichnet,** daß innerhalb der Umfangsbereiche (A,B) Zwischenrastungen vorgesehen sind.

7. Bedienelement nach einem der vorhergehenden Ansprüche, **dadurch gekennzeichnet**, daß durch eine Betätigung des Schalters (21) als weitere Dachkomponenten seitliche und hintere zeitweise feststehende Dachteile (6a,6b; 7,8) gemeinsam mit dem oder den geöffneten Schiebedeckel(n) (4,5) zur Freigabe einer cabrioartigen Dachöffnung in einen Stauraum (12) im hinteren Teil des Fahrzeuges verfahrbar sind.

8. Bedienelement nach Anspruch 7, **dadurch gekennzeichnet**, daß der Schalter (21) ausgehend von der Nullstellung (100) in der bezüglich des ersten Umfangsbereiches (A) umgekehrten Drehrichtung einen Schaltbereich (D) aufweist, der zur Ansteuerung der Antriebe (14,15,16,17,18,19) aller Dachkomponenten (3,4,5,6a,6b,7,8,9,10,11) für eine vollständige Schließung des Daches dient.

9. Bedienelement nach Anspruch 7 oder 8, **dadurch gekennzeichnet**, daß der Schalter (21) anschließend an den zweiten Umfangsbereich (B) einen Schaltbereich (C) aufweist, der zur Ansteuerung der Antriebe (14,15,18,19) der weiteren Dachkomponenten (6a,6b,7,8,9,10,11) für eine vollständige Öffnung des Daches dient.

10. Bedienelement nach Anspruch 8 oder 9, **dadurch gekennzeichnet**, daß die Schaltbereiche (D bzw. C) für das vollständige Schließen bzw. Öffnen des Daches als Taster ausgelegt sind.

11. Bedienelement nach weigstens einem der Ansprüche 8 bis 10, **dadurch gekennzeichnet**, daß eine Betätigung des Schalters (21) in den Schaltbereichen (D bzw. C) für das vollständige Schließen oder Öffnen des Daches bei gleichzeitigem Überschreiten einer bestimmten Geschwindigkeit des Fahrzeuges ein Warnsignal erzeugt.

12. Bedienelement nach wenigstens einem der Ansprüche 8 bis 11, **dadurch gekennzeichnet**, daß eine Betätigung des Schalters (21) in den Schaltbereichen (D bzw. C) für das vollständige Schließen oder Öffnen des Daches bei gleichzeitigem Überschreiten einer bestimmten Geschwindigkeit des Fahrzeuges blockiert wird.

13. Bedienelement nach einem der vorhergehenden Ansprüche, **dadurch gekennzeichnet**, daß als weitere öffnungsfähige Dachkomponente eine absenkbare Heckscheibe (9) vorgesehen ist, zu deren separater wechselweiser Öffnungs- bzw. Schließbewegung ein in einem Griff (22) des Schalters (21) angeordneter Tipp-Taster (23) vorgesehen ist.

## Claims

1. An operating element for a vehicle roof which can be opened through various intermediate stages by a motor, with a rotatable switch (21) and with, arranged around the switch, switch symbols (100-120) to indicate the particular stage of opening at any given time, characterised in that the openable vehicle roof comprises a plurality of roof components (3,4,5,6a,7,8,9,10,11) which to a certain extent can be actuated independently of one another by means of separate drives (14,15,16,17,18,19) and in that upon a rotary movement, the switch (21) triggers in different peripheral zones (A-D) individual or a plurality of drives (14,15,16,17,18,19) for movement to predetermined stages of opening, one after another or simultaneously.

2. An operating element according to Claim 1, characterised in that, starting from a zero position (100) corresponding to the closed position of the roof, the switch, when rotated in one direction and in a first peripheral zone (A) firstly triggers the drive (16) of a wind deflector plate (3) disposed at the front edge of the roof and which can be deployed.

3. An operating element according to Claim 1, characterised in that in a peripheral zone (B) the switch (21) triggers at least one sliding cover (4,5) which is adapted for displacement in a longitudinal direction of the vehicle.

4. An operating element according to Claim 2 and 3, characterised in that the peripheral zone for triggering the at least one sliding cover (4,5) is as a second peripheral zone (B) adjacent the first peripheral zone (A).

5. An operating element according to Claim 4, characterised in that the first peripheral zone (A) and the second peripheral zone (B) together occupy an angle of rotation of about 180° of the switch (21).

6. An operating element according to one of Claims 1 to 5, characterised in that intermediate catches are provided within the peripheral zones (A,B).

7. An operating element according to one of the preceding Claims, characterised in that as further roof components, lateral and rear roof parts (6a,6b;7,8) which are fixed at times can be moved jointly with the opened sliding cover(s) (4,5) into a stowage space (12) in the rear part of the vehicle by actuation of the switch (21) in order to expose a roof opening of the cabriolet type.

8. An operating element according to Claim 7, characterised in that, starting from the zero position (100) and rotating in a direction opposite to that of the first peripheral zone (A), the switch has a switching zone (D) which serves to trigger the drives (14,15,16,17,18,19) of all roof components (3,4,5,6a,6b,7,8,9,10,11) for complete closure of the roof.

9. An operating element according to Claim 7 or 8, characterised in that the switch (21) has adjacent to the second peripheral zone (B) a switching zone (C) which serves to trigger the drives (14,15,18,19) of the further roof components (6a,6b,7,8,9,10,11) for a complete opening of the roof.

10. An operating element according to Claim 8 or 9, characterised in that the switching zones (D or C) for complete closing or opening respectively of the roof are constructed as push-buttons.

11. An operating element according to at least one of Claims 8 to 10, characterised in that actuation of the switch (21) in the switching zones (D or C) respectively for complete closure or opening of the roof generates a warning signal if a specific speed of the vehicle is being exceeded at the same time.

12. An operating element according to at least one of Claims 8 to 11, characterised in that an actuation of the switch (21) in the switching zones (D or C) respectively for complete closure or opening of the roof is disabled if a specific speed of the vehicle is being exceeded at the same time.

13. An operating element according to one of the preceding Claims, characterised in that as a further openable roof component, a lowerable rear window (9) is provided for the separate alternative opening or closing movement of which a touch button (23) is disposed in a handle (22) of the switch (21).

## Revendications

1. Elément de commande permettant d'ouvrir un toit de véhicule de façon motorisée et en plusieurs positions intermédiaires, avec un commutateur (21) qui peut tourner et avec des symboles de commande (100 - 120) disposés tout autour du commutateur pour signaliser le stade d'ouverture correspondant,
caractérisé en ce que
• le toit ouvrant du véhicule comprend plusieurs parties constitutives (3, 4, 5, 6a, 7, 8, 9, 10, 11), à actionner indépendamment les unes des autres, qui peuvent être actionnées au moyen de mécanismes d'entraînements distincts (14, 15, 16, 17, 18, 19) et
• le commutateur (21) commande l'un après l'autre ou en même temps les mécanismes d'entraînement(14, 15, 16, 17, 18, 19) individuels ou plusieurs de ceux-ci, lors d'un mouvement de rotation dans différentes zones périphériques (A - D), pour faire avancer différents stades d'ouverture prédéterminés les uns après les autres.

2. Elément de commande selon la revendication 1,
caractérisé en ce que
le commutateur (21), en partant de l'une des positions zéro (100) correspondant aux positions de fermeture du toit, commande dans un sens de rotation, dans une première zone périphérique (A), d'abord le mécanisme d'entraînement (16) d'une lame de déflexion de vent (3) qui peut sortir et qui est disposée sur le bord antérieur du toit.

3. Elément de commande selon la revendication 1,
caractérisé en ce que
le commutateur (21) commande, dans une zone périphérique (B), le mécanisme d'entraînement (17) d'au moins l'un des couvercles coulissants (4, 5) que l'on peut déplacer dans le sens longitudinal du véhicule.

4. Elément de commande selon la revendication 2 et la revendication 3,
caractérisé en ce que
la zone périphérique pour la commande d'au moins un couvercle coulissant (4, 5) se raccorde, comme deuxième zone périphérique (B), à la première zone périphérique (A).

5. Elément de commande selon la revendication 4,
caractérisé en ce que
la première zone périphérique (A) et la seconde zone périphérique (B) correspondent ensemble à un angle de rotation du commutateur (21) d'environ 180°.

6. Elément de commande selon les revendications 1 à 5,
caractérisé en ce qu'
à l'intérieur des zones périphériques (A, B), il est prévu des encliquetages intermédiaires.

7. Elément de commande selon l'une des revendications précédentes,
caractérisé en ce que
par un actionnement du commutateur (21), des parties latérales et postérieures du toit (6a, 6b ; 7, 8) qui sont temporairement fixes, peuvent, comme autres éléments constitutifs du toit, être mises dans un espace de rangement (12) à la partie arrière du véhicule en même temps que le ou les couvercle(s) coulissant(s) ouvert(s) (4, 5), pour libérer dans le toit une ouverture à la manière d'un cabriolet.

8. Elément de commande selon la revendication 7,
caractérisé en ce que
le commutateur (21) présente, en partant de la position zéro (100) dans le sens de rotation inverse en ce qui concerne la première zone périphérique (A), une zone de commande (D) qui sert à commander les mécanismes d'entraînement (14, 15, 16, 17, 18, 19) de toutes les parties constitutives (3, 4, 5, 6a, 6b, 7, 8, 9, 10, 11) pour obtenir une fermeture complète du toit.

9. Elément de commande selon la revendication 7 ou la revendication 8,
caractérisé en ce que
le commutateur (21) présente, à la suite de la seconde zone périphérique (B), une zone de commande (C) qui sert à commander les mécanismes d'entraînement (14, 15, 18, 19) des autres parties constitutives du toit (6a, 6b, 7, 8, 9, 10, 11) pour obtenir une ouverture complète du toit.

10. Elément de commande selon la revendication 8 ou la revendication 9,
caractérisé en ce que
les zones de commande (D ou C) qui servent à commander la fermeture ou l'ouverture complète du toit, sont conçues sous la forme de poussoirs.

11. Elément de commande selon l'une au moins des revendications précédentes,
caractérisé en ce que
l'actionnement de l'interrupteur (21) dans les zones de commutation (D ou C), pour la fermeture ou l'ouverture complète du toit, produit un signal d'avertissement quand, en même temps, le véhicule dépasse une vitesse déterminée.

12. Elément de commande, selon au moins l'une des revendications 8 à 11,
caractérisé en ce que
l'actionnement du commutateur (21) dans les zones de commande (D ou C), pour la fermeture ou l'ouverture complète du toit, est bloqué quand, en même temps, le véhicule dépasse une vitesse déterminée.

13. Elément de commande selon l'une des revendications précédentes,
caractérisé en ce que
l'on prévoit, en tant qu'autre partie constitutive du toit susceptible de s'ouvrir, un capot arrière (9) qui peut s'abaisser, un poussoir à impulsion (23) étant prévu pour provoquer alternativement son mouvement d'ouverture ou de fermeture séparément, en étant disposé dans une poignée (22) du commutateur (21).
